# EUROPÄISCHE PATENTSCHRIFT

(11) **EP 0 422 709 B1**
(45) Veröffentlichungstag und Bekanntmachung des Hinweises auf die Patenterteilung: **19.10.1994**
(21) Anmeldenummer: 90202536.0
(22) Anmeldetag: 25.09.1990
(51) Int. Cl.: B01D 50/00, F23J 3/04, F23J 15/00

(54) **Verfahren zur Enstaubung von Abgasen**
Process for the removal of dust from gases
Procédé pour la séparation des poussières des effluents gazeux

(30) Priorität: 13.10.1989 DE 3934183
(43) Veröffentlichungstag der Anmeldung: 17.04.1991
(73) Patentinhaber: METALLGESELLSCHAFT AG, 60323 Frankfurt am Main (DE)
(72) Erfinder: Weber, Ekkehard, Prof. Dr., D-4300 Essen 17 (DE)

(56) Entgegenhaltungen:
- EP-A- 0 402 972
- DE-A- 870 549
- DE-A- 1 432 023
- DE-A- 2 329 248
- DE-A- 3 644 381
- US-A- 4 314 830
- US-A- 4 865 629

## Beschreibung

Die Erfindung bezieht sich auf ein Verfahren zur Entstaubung des Abgases einer Verbrennungsanlage, insbesondere einer Müllverbrennungsanlage, das hinter der Feuerung bei Temperaturen von 300 bis 1000°C, vorzugsweise 400 bis 900°C, durchgeführt wird.

Es ist bekannt, daß sich bei Verbrennungsprozessen und insbesondere bei der Abfallverbrennung hochkondensierte aromatische Kohlenwasserstoffe sowie Dioxine bilden, die mit dem Filterstaub sowie mit dem Abgas aus der Verbrennungsanlage ausgetragen werden. Mit dem Sammelbegriff "hochkondensierte aromatische Kohlenwasserstoffe" werden die mehrkernigen Aromaten bezeichnet, die auch eine oder mehrere OH-Gruppen aufweisen können. Mit dem Sammelbegriff "Dioxine" werden die polychlorierten Dibenzo-p-Dioxine und die polychlorierten Dibenzofurane bezeichnet. Zu den Dioxinen gehören insgesamt 210 Isomere, von denen einige außerordentlich giftig sind. Die hochkondensierten aromatischen Kohlenwasserstoffe sind ebenfalls gesundheitsschädlich, da sie als krebserregende Substanzen gelten. Wegen der Giftigkeit der hochkondensierten aromatischen Kohlenwasserstoffe und der Dioxine ist es erforderlich, diese Verbindungen aus dem Filterstaub bzw. dem Abgas zu entfernen oder die Bildung dieser Verbindungen in der Verbrennungsanlage zu vermeiden.

Es ist bekannt, daß in Verbrennungsanlagen bei 300 bis 400°C - also während der Abkühlung der Abgase - durch Rekombination organischer Radikale in Gegenwart von Sauerstoff hochkondensierte aromatische Kohlenwasserstoffe gebildet werden, die auch OH-Gruppen enthalten können. Es ist ferner bekannt, daß in Verbrennungsanlagen beim Abkühlen der Abgase auf weniger als 300°C Dioxine gebildet werden, was darauf zurückgeführt wird, daß sich während der Verbrennung bei höheren Verbrennungstemperaturen aus den vorhandenen Chlorverbindungen in Gegenwart von Sauerstoff Chlor bildet, das dann im Verlauf der Abkühlung der Abgase mit den noch vorhandenen organischen Verbindungen oder mit Kohlenstoff unter Bildung von Dioxinen reagiert. Diese Reaktion wird durch die in den Flugstäuben vorhandenen Schwermetallverbindungen (Oxide, Chloride) katalysiert. Daher wurde bereits vorgeschlagen, die Flugasche aus dem Abgasstrom von Verbrennungsanlagen bei Temperaturen oberhalb 300°C abzutrennen, zumal bekannt ist, daß hochkondensierte aromatische Kohlenwasserstoffe sowie Dioxine oberhalb 600°C thermisch instabil sind.

Aus der US-A-4,865,629 ist ein Verfahren zur Abtrennung feiner Partikeln aus einem Heißgasstrom bekannt, bei dem eine Fraktion dieser Partikeln durch einen Fliehkraftabscheider abgetrennt wird. Ein Teil dieser abgetrennten Fraktion wird dem aus dem Fliehkraftabscheider austretenden Heißgasstrom wieder zugeführt, bevor das Heißgas in einen Filtrationsabscheider geleitet wird. Mit diesem Verfahren soll die Bildung eines Filterkuchens, d.h. die Bildung einer Schicht aus den im Abgas enthaltenen Partikeln auf der Filteroberfläche, die zur Zerstörung der Filterfunktion führen kann, vermieden werden.

Aus der DE-A-3 644 381 ist ein Verfahren zur Minimierung von Schadstoff-Emissionen aus Verbrennungsanlagen bekannt, bei dem die Entstaubung der Rauchgase im Temperaturbereich um oder oberhalb 300°C unmittelbar hinter der Feuerung vor oder im ersten Teilbereich des Wärmeaustauschers erfolgt. Die Entstaubung wird in einer Trenndüse (Fliehkraftabscheider) aus keramischem Material oder in einem Schüttschichtfilter oder in einer Trenndüse und einem nachgeschalteten Schüttschichtfilter durchgeführt. Mit dem in der DE-A-3 644 381 vorgeschlagenen Verfahren soll die katalytische Bildung von Dioxinen durch die Flugstaub-Partikel im Rauchgas während der Abkühlphase verhindert werden. Es hat sich aber gezeigt, daß weder ein Schüttschichtfilter noch ein Fliehkraftabscheider dazu in der Lage sind, das Verbrennungsabgas so weit zu entstauben, daß die Bildung von hochkondensierten aromatischen Kohlenwasserstoffen und Dioxinen immer ausgeschlossen ist. Untersuchungen haben nämlich gezeigt, daß zumindest zeitweise im Reingas von Verbrennungsanlagen, die mit einem Schüttschichtfilter und/oder einem Fliehkraftabscheider entstaubt werden, Staubgehalte > 20 mg/Nm³ vorliegen und daß bereits diese geringen Staubgehalte ausreichen können, um die Bildung von hochkondensierten aromatischen Kohlenwasserstoffen und insbesondere Dioxinen zu katalysieren.

Um den Nachteil des aus der DE-A-3 644 381 bekannten Verfahrens zu vermeiden, wurde in der EP-A-0 402 972 (Priorität: 16.06.89; Anmeldetag: 26.05.90; Veröffentlichungstag: 19.12.90) vorgeschlagen, zur Entstaubung der Verbrennungsabgase ein aus SiO₂, Al₂O₃ und/oder ZrO₂ sowie einem anorganischen Bindemittel bestehendes keramisches Filterelement mit einem Porenvolumen von 50 bis 90 % zu verwenden, wobei das Filterelement als Sinterkörper, Gewebe oder Filz ausgebildet ist. Der Einsatz derartiger Filterelemente garantiert im Reingas einen Reststaubgehalt von < 2 mg/Nm³.

Es wurde nun gefunden, daß die Bildung von hochkondensierten aromatischen Kohlenwasserstoffen und von Dioxinen nicht nur von der Staubmenge, sondern auch von der im Abgas enthaltenen Kohlenstoffmenge beeinflußt wird. Dies bedeutet, daß auch bei relativ hohen Reststaubgehalten im Reingas (z.B. 10 mg/Nm³) dann keine Dioxine und hochkondensierten aromatischen Kohlenwasserstoffe gebildet werden, wenn der Kohlenstoffgehalt gegen Null geht. Es wurde ferner gefunden, daß der CO-Gehalt des Reingases ein Indikator für den C-Gehalt des Reingases ist, da C- und CO-Gehalt miteinander korrelieren.

Der Erfindung liegt die Aufgabe zugrunde, ein Verfahren zur Entstaubung von Verbrennungsabgasen zu schaffen, das einerseits die Bildung von Dioxinen und hochkondensierten aromatischen Kohlenwasserstoffen mit Sicherheit vermeidet und das andererseits die Einhaltung eines bestimmten Reststaubgehaltes im Reingas - also eines Grenzwertes - erlaubt. Das Verfahren soll ein Höchstmaß an Betriebssicherheit aufweisen und mit einem Minimum an Filtrationsarbeit - also mit geringer Filterfläche, geringem Filtervolumen und geringem Druckverlust - betrieben werden.

Die der Erfindung zugrundeliegende Aufgabe wird gelöst durch ein Verfahren zur Entstaubung von Abgasen einer Verbrennungsanlage, insbesondere einer Müllverbrennungsanlage, das hinter der Feuerung bei Temperaturen von 300 bis 1000°C, vorzugsweise 400 bis 900°C, durchgeführt wird und bei dem je ein Teilstrom des staubhaltigen Abgases einem Fliehkraftabscheider, vorzugsweise einem Zyklon, und einem Filtrationsabscheider, bestehend aus mindestens einem keramischen Filterelement, zugeführt wird, die parallel geschaltet sind, wobei die dem Fliehkraftabscheider zugeführte Abgasmenge in Abhängigkeit vom Staubgehalt und/oder vom CO-Gehalt des gesamten Reingases um maximal ± 10 %, bezogen auf den Auslegungswert, verändert wird und wobei dem Filtrationsabscheider die vergrößerte oder verkleinerte Abgasmenge zugeführt wird, die sich beim Betrieb des Fliehkraftabscheiders durch die Veränderung der Abgasmenge ergibt.

Dadurch, daß je ein Teilstrom des staubhaltigen Abgases einem Fliehkraftabscheider und einem Filtrationsabscheider zugeführt wird, können die Installations- und Betriebskosten im Vergleich zu einem allein betriebenen Filtrationsabscheider erheblich vermindert werden. Dadurch, daß die dem Fliehkraftabscheider zugeführte Abgasmenge um maximal ± 10 % verändert wird, kann der Fliehkraftabscheider ständig mit optimaler Entstaubungsleistung betrieben werden, so daß die Filtrationsarbeit ein Minimum erreicht. Die dem Fliehkraftabscheider und damit auch dem Filtrationsabscheider zugeführten Abgasmengen sollen in Abhängigkeit vom Staubgehalt und/oder vom CO-Gehalt des Reingases geregelt werden. Dies geschieht in der Weise, daß im Reingas eine kontinuierliche Staubmessung erfolgt und daß bei Überschreiten der maximal zulässigen Staubkonzentration im gesamten Reingas der Filtrationsabscheider mit bis zu 10 % mehr und der Fliehkraftabscheider mit bis zu 10 % weniger staubhaltigem Abgas beaufschlagt werden. Andererseits wird die dem Filtrationsabscheider zugeführte Abgasmenge innerhalb der erfindungsgemäßen Regelgrenze in dem Maß verringert, in dem sich der Staubgehalt des gesamten Reingases dem zulässigen Grenzwert angleicht. Anstelle der oder zusätzlich zur Staubmessung wird im gesamten Reingas erfindungsgemäß eine kontinuierliche CO-Messung durchgeführt, da der CO-Gehalt des Reingases auch angibt, wieviel Kohlenstoff zur Bildung der unerwünschten Dioxine und hochkondensierten aromatischen Kohlenwasserstoffe zur Verfügung steht, denn mit zunehmendem CO-Gehalt steigt auch der C-Gehalt des Abgases. Überschreitet der im Reingas gemessene CO-Wert den maximal zulässigen CO-Grenzwert, wird der Filtrationsabscheider im Rahmen der erfindungsgemäßen Regelgrenze so lange mit einer größeren Menge des zu entstaubenden Abgases beaufschlagt, bis der CO-Gehalt wieder den zulässigen Grenzwert erreicht. Mit dieser Verfahrensführung ist es möglich, den Staubgehalt noch unter den zulässigen Grenzwert abzusenken, um die katalytische Wirkung des Staubes mit Sicherheit auszuschließen. Fliehkraftabscheider haben sich zur Durchführung des erfindungsgemäßen Verfahrens besonders bewährt, da sie gegenüber allen anderen Massenkraftabscheidern die höchste Abscheideeffektivität besitzen. Die Fliehkraftabscheider sind mit keramischem Material ausgekleidet und werden daher durch die heißen Abgase nicht angegriffen. Der zur Durchführung des erfindungsgemäßen Verfahrens verwendete Filtrationsabscheider ist als Kerzenfilter, Schlauchfilter oder Taschenfilter ausgebildet.

Nach der Erfindung ist ferner vorgesehen, daß als Fliehkraftabscheider zwei oder drei hintereinander geschaltete Zyklone verwendet werden, da durch diese Maßnahme eine Verminderung des Staubgehaltes des entsprechenden Abgasteilstroms erreicht wird.

Nach der Erfindung ist auch vorgesehen, daß das keramische Filterelement aus Fasern besteht, die mit einem anorganischen Bindemittel zu einem Filz verdichtet sind, daß es 30 bis 70 Gew.% Al₂O₃, 15 bis 50 Gew.% SiO₂ und 1 bis 10 Gew.% eines anorganischen Bindemittels enthält und daß es ein Porenvolumen von 50 bis 90 % sowie eine Dicke von 6 bis 30 mm aufweist. Ein derartig gestaltetes keramisches Filterelement hat sich im Langzeitbetrieb (ca. 8000 Stunden) besonders gut bewährt und ermöglicht eine nahezu quantitative Entstaubung der Verbrennungsabgase.

Das erfindungsgemäße Verfahren kann besonders erfolgreich durchgeführt werden, wenn der Filtrationsabscheider mit einer Anströmgeschwindigkeit von 1 bis 5 cm/sec, vorzugsweise 1 bis 3 cm/sec, betrieben wird, denn bei diesen Anströmgeschwindigkeiten resultiert ein Druckverlust, der sowohl in technischer als auch in wirtschaftlicher Hinsicht toleriert werden kann.

Nach der Erfindung ist es zweckmäßig, wenn die Abreinigung des keramischen Filterelements durch Rückspülung und/oder durch Pulsen mit bereits gereinigtem Gas erfolgt, wobei die Temperatur am Filterelement 300 bis 900°C beträgt. Der im Fliehkraftabscheider und im Filtrationsabscheider abgetrennte Staub wird in einem geschlossenen Gefäß unter Luftabschluß abgekühlt. Hierdurch wird erreicht, daß auch während des Rückspülvorgangs und des Staubaustrags keine hochkondensierten aromatischen Kohlenwasserstoffe und keine Dioxine gebildet werden.

Mit dem erfindungsgemäß zu verwendenden keramischen Filtrationsabscheider werden Staubgehalte im Reingas < 2 mg/Nm³ erreicht. Mit einem als Fliehkraftabscheider wirkenden Zyklon, der mit einem beweglichen Tauchrohr versehen sein kann, wird ein Staubgehalt im Reingas von < 100 mg/Nm³ erzielt, während durch das Hintereinanderschalten von zwei Zyklonen ein Staubgehalt im Reingas von < 50 mg/Nm³ erreicht werden kann. Die vorgenannten Entstaubungsleistungen der Staubabscheider beziehen sich auf ein Abgas, das einen Staubgehalt von 1 bis 10 g/Nm³ hat. Wenn für ein solches Abgas ein Grenzwert von 10 mg Staub pro Nm³ festgelegt wird, müssen nach dem erfindungsgemäßen Verfahren 20 % des staubhaltigen Abgases durch zwei hintereinander geschaltete Zyklone und 80 % des staubhaltigen Abgases durch einen keramischen Filtrationsabscheider gereinigt werden. Eventuelle Grenzwertüberschreitungen des Staubgehalts und des CO-Gehalts im Reingas können dann ohne weiteres durch die erfindungsgemäße Mengenregelung beherrscht werden, ohne daß die optimale Entstaubungsleistung der hintereinander geschalteten Fliehkraftabscheider verschlechtert wird und ohne daß sich die Anströmgeschwindigkeit am Filtrationsabscheider signifikant ändert.

Der Gegenstand der Erfindung wird nachfolgend anhand eines Ausführungsbeispiels näher erläutert.

Eine Müllverbrennungsanlage erzeugt pro Stunde 36 500 Nm³ Abgas, das einen Staubgehalt von 7,6 g/Nm³ aufweist und bei 680°C entstaubt wird. Der Filtrationsabscheider enthält mehrere keramische Filterelemente, die insgesamt eine Filterfläche von 910 m² aufweisen. Dem Filtrationsabscheider werden 22 500 Nm³ Abgas mit einer Anströmgeschwindigkeit von 2,3 cm/sec zugeführt. Der aus dem Filtrationsabscheider austretende Reingasstrom hat einen Reststaubgehalt von 1 mg/Nm³; der durch den Filtrationsabscheider verursachte Druckverlust beträgt 2 200 Pa. Parallel zum Filtrationsabscheider ist ein Fliehkraftabscheider geschaltet, der aus zwei hintereinander geschalteten Zyklonen besteht. Dem Fliehkraftabscheider werden 14 000 Nm³ Abgas mit einer Einströmgeschwindigkeit von 17,42 m/sec zugeführt. Der aus dem Fliehkraftabscheider austretende Reingasstrom hat einen Staubgehalt von 50 mg/Nm³ und der Druckverlust des aus zwei Zyklonen bestehenden Fliehkraftabscheiders beträgt 1 640 Pa. Bei der Vereinigung der beiden Reingasteilströme resultiert pro Stunde ein Reingasstrom von 36 500 Nm³ mit einem Staubgehalt von 20 mg/Nm³. Schwankungen des Staubgehalts des Reingases können dadurch ausgeglichen werden, daß die dem Fliehkraftabscheider zugeführte Abgasmenge um ± 1 400 Nm³/h schwankt. Es ist ohne weiteres möglich, den Filtrationsabscheider pro Stunde mit einer Abgasmenge von ± 1 400 Nm³ zu be- bzw. zu entlasten. Wäre die vom Fliehkraftabscheider zu leistende Entstaubungsarbeit vom Filtrationsabscheider zu leisten, würde sich zwar ein Reingasstaubgehalt von 1 mg/Nm³ ergeben. Die Filterfläche müßte aber von 910 m² auf 1 476 m² erhöht werden. Da sich bei der Müllverbrennungsanlage wegen des außerordentlich geringen CO-Gehalts ein Reststaubgehalt von 20 mg/Nm³ als ausreichend erwiesen hat, kann auf die Installation von teurer Filterfläche zugunsten eines kostengünstigen Fliehkraftabscheiders verzichtet werden.

## Patentansprüche

1. Verfahren zur Entstaubung von Abgasen einer Verbrennungsanlage, insbesondere einer Müllverbrennungsanlage, das hinter der Feuerung bei Temperaturen von 300 bis 1000°C, vorzugsweise 400 bis 900°C, durchgeführt wird und bei dem je ein Teilstrom des staubhaltigen Abgases einem Fliehkraftabscheider, vorzugsweise einem Zyklon, und einem Filtrationsabscheider, bestehend aus mindestens einem keramischen Filterelement, zugeführt wird, die parallel geschaltet sind, wobei die dem Fliehkraftabscheider zugeführte Abgasmenge in Abhängigkeit vom Staubgehalt und/oder vom CO-Gehalt des gesamten Reingases um maximal ± 10 %, bezogen auf den Auslegungswert, verändert wird und wobei dem Filtrationsabscheider die vergrößerte oder verkleinerte Abgasmenge zugeführt wird, die sich beim Betrieb des Fliehkraftabscheiders durch die Veränderung der Abgasmenge ergibt.

2. Verfahren nach Anspruch 1, dadurch gekennzeichnet, daß als Fliehkraftabscheider zwei oder drei hintereinander geschaltete Zyklone verwendet werden.

3. Verfahren nach den Ansprüchen 1 bis 2, dadurch gekennzeichnet, daß das keramische Filterelement aus Fasern besteht, die mit einem anorganischen Bindemittel zu einem Filz verdichtet sind, daß es 30 bis 70 Gew.% Al₂O₃, 15 bis 50 Gew.% SiO₂ und 1 bis 10 Gew.% eines anorganischen Bindemittels enthält und daß es ein Porenvolumen von 50 bis 90 % sowie eine Dicke von 6 bis 30 mm aufweist.

4. Verfahren nach den Ansprüchen 1 bis 3, dadurch gekennzeichnet, daß der Filtrationsabscheider mit einer Anströmgeschwindigkeit von 1 bis 5 cm/sec, vorzugsweise 1 bis 3 cm/sec, betrieben wird.

5. Verfahren nach den Ansprüchen 1 bis 4, dadurch gekennzeichnet, daß die Abreinigung des keramischen Filterelements durch Rückspülung und/oder durch Pulsen mit bereits gereinigtem Gas erfolgt, wobei die Temperatur am Filterelement 300 bis 900°C beträgt.

## Claims

1. A process for dedusting exhaust gases from an incineration plant, especially a refuse incineration plant, which is effected downstream of the furnace at temperatures of from 300 to 1000°C, preferably 400 to 900°C and in which a partial stream of dust-containing exhaust gas is conveyed to a centrifugal separator, preferably a cyclone, and a filtration separator, consisting of at least one ceramic filter element, which members are connected in parallel, the quantity of exhaust gas supplied to the centrifugal separator being altered depending on the dust content and/or CO content of the overall clean gas by a maximum of ± 10 %, with respect to the design value, and there being supplied to the filtration separator the increased or reduced quantity of exhaust gas arising upon operation of the centrifugal separator through the alteration in exhaust gas quantity.

2. A process according to claim 1, characterized in that two or three cyclones connected one after the other are used as the centrifugal separator.

3. A process according to either one of claims 1 and 2, characterized in that the ceramic filter element consists of fibres which are compressed with an inorganic binder to form a felt, in that it contains from 30 to 70 % by weight Al₂O₃, 15 to 50 % by weight SiO₂ and 1 to 10 % by weight of an inorganic binder and in that it has a pore volume of from 50 to 90 % and a thickness of from 6 to 30 mm.

4. A process according to any one of claims 1 to 3, characterized in that the filtration separator is operated at a speed of advance of from 1 to 5 cm/sec., preferably 1 to 3 cm/sec.

5. A process according to any one of claims 1 to 4, characterized in that cleaning of the ceramic filter element is effected by backwashing and/or by pulsing with already cleaned gas, the temperature at the filter element amounting to from 300 to 900°C.

## Revendications

1. Procédé de dépoussiérage d'effluents gazeux d'une installation d'incinération, notamment d'une installation d'incinération d'ordures, qui est effectué en aval du foyer à des températures de 300 à 1000°C, de préférence de 400 à 900°C, et dans lequel un courant partiel de l'effluent gazeux contenant des poussières est amené à un séparateur par force centrifuge, de préférence à un cyclone, et à un séparateur par filtration constitué d'au moins un élément filtrant en céramique, qui sont montés en parallèle, la quantité d'effluent gazeux amenée au séparateur par centrifugation se modifiant en fonction de la teneur en poussière et/ou de la teneur en CO de tout le gaz épuré, d'au plus ± 10% par rapport à la valeur pour laquelle l'installation est conçue, et la quantité d'effluent gazeux plus grande ou plus petite qui est obtenue, lors du fonctionnement du séparateur par force centrifuge, par la modification de la quantité de l'effluent gazeux étant envoyée au séparateur par filtration.

2. Procédé suivant la revendication 1, caractérisé en ce qu'il consiste à utiliser comme séparateur par force centrifuge deux ou trois cyclones montés en série.

3. Procédé suivant la revendication 1 ou 2, caractérisé en ce que l'élément filtrant céramique est constitué de fibres qui sont comprimées par un liant minéral en un feutre, en ce qu'il contient de 30 à 70% en poids d'Al₂O₃, de 15 à 50% en SiO₂ et de 1 à 10% en poids d'un liant minéral, et en ce qu'il a un volume de pores de 50 à 90% ainsi qu'une épaisseur de 6 à 30 mm.

4. Procédé suivant l'une des revendications 1 à 3, caractérisé en ce que le séparateur par filtration fonctionne à une vitesse d'afflux de 1 à 5 cm par seconde, et de préférence de 1 à 3 cm par seconde.

5. Procédé suivant l'une des revendications 1 à 4, caractérisé en ce qu'il consiste à effectuer le nettoyage de l'élément filtrant en céramique par lavage en retour et/ou par envoi pulsé de gaz déjà épuré, la température de l'élément filtrant étant de 300 à 900°C.
